# EUROPEAN PATENT APPLICATION

(11) **EP 4 718 261 A1**
(43) Date of publication of application: **01.04.2026**
(21) Application number: 24203744.8
(22) Date of filing: 30.09.2024
(51) Int. Cl.: G06F 11/16, G06F 11/20, G05B 9/03

(54) **METHOD OF OPERATING A SYSTEM, APPARATUS, AND SYSTEM**

(71) Applicant: Hitachi Energy Ltd, 8050 Zürich (CH)
(72) Inventor: GERSPACH, Stephan, 79737 Herrischried (DE); INDLEKOFER, Andreas, 79771 Klettgau (DE); EIDENBENZ, Raphael, 8049 Zürich (CH)
(74) Representative: Vossius & Partner Patentanwälte Rechtsanwälte mbB

(57) **Abstract**

The present disclosure relates to a method of operating a system (10), the system (10) including a first device (12) and a second device (14), the second device (14) being configured to act as a backup device to the first device (12), the first device (12) and the second device (14) each having a service-oriented architecture, SOA. The method includes evaluating, by the system (10), a readiness of the second device (14) to take over operation from the first device (12) based on data which is gathered and/or calculated, while the system (10) is in operation; generating, by the system (10), a readiness signal based on evaluating the readiness of the second device (14) to take over operation from the first device (12); determining, by the system (10), whether to cause and/or allow the second device (14) to take over operation from the first device (12) based on the readiness signal.

The present disclosure also relates to an apparatus and a system (10).

## Description

Systems which include at least one first device and at least one second device which serves as a backup or standby device to the first device, also known as redundancy or redundant systems, are widely used in a variety of different fields and/or for a variety of different purposes. For instance, such systems are often used for controlling a battery storage.

The first device may be operated as a "hot" device and the second device, i.e., the "backup" or "redundant" or "standby" device, may take over operation for the first device, e.g., while the first device is being serviced or updated and/or when the first device is faulty. In other words, the first device and the second device may alternately be the "hot device" or the "backup" or "redundant" or "standby" device.

However, there are several disadvantages in the systems, methods, or mechanisms known from the prior art. For instance, redundant systems known from the prior art do not have any knowledge or information about when a standby device is ready to take over operation from the "hot" device or the knowledge or information is insufficient and/or deficient, e.g., by lacking vital information. This may cause relatively large disturbances, e.g., "bumps", when switching from the "hot" device to the "standby" device.

Thus, there is a need to improve various aspects related to redundancy systems, for example, by addressing one or more of the drawbacks described above.

One or more drawbacks related to redundancy systems, in particular one or more of the drawbacks described above, may be improved by one or more aspects of the present disclosure.

According to a first aspect of the present disclosure, there is provided a method of operating a system. The system may include a first device and a second device. The second device may be configured to act as a backup device to the first device. The first device and the second device may each have a service-oriented architecture, SOA. The method may include evaluating, by the system, e.g., by a processor of the system, a readiness of the second device to take over operation from the first device based on data which is gathered and/or calculated, e.g., by a processor and/or module of the system, while the system is in operation. The method may include generating, by the system, e.g., by a processor of the system, a readiness signal based on evaluating the readiness of the second device to take over operation from the first device. The method may include determining, by the system, e.g., by a processor of the system, whether to cause and/or allow the second device to take over operation from the first device based on the readiness signal.

Thus, the method described herein may allow an evaluation of the readiness of the second device to take over operation from the first device to be based on online data, i.e., based on data generated and/or gathered during live operation of the first device and/or the second device.

The method may provide products with a device-level redundancy in a cost-efficient manner, since no extra adaptation of the software platform itself is required. At the same time, the achieved quality of switchovers ("failovers") can be tuned to an optimal level, i.e., to be bumpless, in particular without an unnecessary margin on timings and unnecessary blocking of failovers due to uncertainty about readiness, e.g., synchronization quality of the "hot" device and the standby device.

As mentioned at the beginning, most or at least many redundant systems known from the prior art do not have any knowledge or information about when a standby device is ready to take over operation from the "hot" device. Moreover, in case some knowledge or information about when a standby device is ready to take over operation from the "hot" device is provided in the respective system or method known from the prior art, the respective knowledge or information may be insufficient and/or deficient, e.g., by lacking vital information. For instance, the knowledge or information may be based or collected on a comparison of the respective devices in an offline state, e.g., by comparing if the same Firmware version is provided on the respective devices, the same configuration version is provided on the respective devices, etc. However, such knowledge or information is insufficient or deficient, as mentioned above, e.g., since it is not related to an online state of the devices. This may cause relatively large disturbances, e.g., "bumps", and/or relative long switchover (or "takeover") times, when switching from the "hot" device to the standby device. The method described herein may at least partially improvement the disadvantages of the prior art, e.g., by reducing the disturbances, e.g., "bumps", and/or a switchover (or "takeover") time, when switching from the "hot" device to the standby device, e.g., by allowing a substantially "bumpless" switchover (also referred to as "takeover") and/or a relatively quick switchover ("takeover") between the respective devices, i.e., from the "hot" device to the standby or backup device. For instance, the method described herein may allow the readiness of the second device to take over operation from the first device to be based on a comparison of calculated results on both of the first device and the second device during operation of the system.

Moreover, the method described herein may allow a generic software platform to achieve a mechanism for relatively smooth, e.g., substantially "bumpless", takeovers for various applications

Whether a switchover of takeover (sometimes also referred to as "failover") is bumpless or not may depend on:
- A level of state synchronization of the standby device, i.e., the second device, to the hot device, i.e., the first device.
- A sensitivity of the system and application, e.g., if a signal change is still bumpless or not depends on a tolerance provided or specified or defined in the respective application.
- A time needed to execute a failover (referred to as "failover time").

Thus, the method may ensure that, for a smooth failoverto the standby device, i.e., the second device, a generic software platform that supports device-level redundancy should only switchover or "failover" to the redundant standby device, i.e., the second device, if the switchover or "failover" does not cause relatively large disruptions, e.g., less than a predetermined threshold of disruptions, in the system.

The readiness for takeover by the second device may be evaluated by the method based on a level of state synchronization between the first device and the second device. Hence, the method disclosed herein may provide a mechanism for evaluating how well the states of two devices, i.e., the first device and the second device, are synchronized in a software platform, in particular that may serve a large variety of different applications domains. The method may enable the domain specific application to provide an estimate of the level of synchronization based on a comparison of application signals on both devices. The software platform may incorporate this knowledge into the decision whether a failover to the standby device, i.e., the second device, is or should be executed or not.

Various embodiments may preferably implement the following features:
Preferably, all steps of the method are performed while the system is in online or "live" operation. Alternatively, one or more steps, e.g., one or more steps which are not mentioned above or herein but may be included in the method, may be performed while the system is offline or not in "live" operation, e.g., one or more steps for preparing the system.

The method may be used in a variety of different fields, for a variety of different purposes, and/or for a variety of different types of devices. For instance, the first device and the second device may be controllers, e.g., controllers for controlling a battery storage and/or power plant controllers. As a further example, the method may be used or employed for a thermostat, i.e., a controller for controlling a heating device, or a thermostat system.

Preferably, evaluating, by the system, e.g., by a processor of the system, a readiness of the second device to take over operation from the first device includes:
determining, by the system, e.g., by a processor of the system, a degree of synchronization between the first device and the second device, preferably between one or more services of the first device and one or more services of the second device.

The "synchronization between the first device and the second device" mentioned above may be or may include a synchronization of one or more states of one or more service modules of the first and the second device. In other words, the "synchronization between the first device and the second device" may be or may include a "state synchronization between the first device and the second device". The "synchronization between the first device and the second device" may not include or may not refer to a synchronization of one or more clocks of the first device and the second device.

Preferably, the degree of synchronization between the first device and the second device is determined by comparing one or more outputs of the first device with one or more outputs of the second device and determining a degree of deviation of the one or more outputs of the first device from the one or more outputs of the second device. The one or more outputs may be or may include one or more outputs which are sent from the first device to the second device and/or vice versa. Alternatively, or additionally, the one or more outputs may be or may include one or more outputs of one or more service of the first device which are sent or addressed to at least one further service of the first device. Alternatively, or additionally, the one or more outputs may be or may include one or more outputs of one or more service of the second device which are sent or addressed to at least one further service of the second device. The one or more outputs may be or may include one or more control outputs, e.g., of one or more controllers, e.g., in case the first device and the second are or include controllers.

Thus, the degree of synchronization may refer to or be at least partially defined by a quality of the output(s) of the redundant device, i.e., the second device, and may mean that the output(s) of the system are perceived by other devices, e.g., external devices, in such a way that signal value changes due to the switchover are small enough so that they do not cause a noticeable "bump". A bump can thus be described as a change in the signal that would lead to different behavior by the surrounding device(s).

Preferably, the system includes at least one library, preferably at least one fault tolerance library. The library may read and/or detect and/or include a state of one or more services and/or one or more sub-devices, preferably one or more controllers, of the second device, and may determine the readiness of the second device to take over operation from the first device based on the state. The state may be or may include a mode, e.g., a redundancy mode. i.e., whether the first device or the second device, respectively, are in a "standby" mode or state or in a "hot" mode or state.

Preferably, the system includes at least one embedded programmable logic controller, PLC. The library may be comprised by the PLC or a PLC application or PLC program, in particular of the PLC. The PLC may embed or be embedded in a soft-PLC platform. The method and system do tightly depend on a soft PLC. The method and system may be used also with any other type of embedder or virtual execution environment for application logic or plugin mechanism.

The PLC application(s) may access or be able to access certain functionality of the platform such as specific communication protocols, etc. via a set of PLC libraries, which may be part of the automation platform and an interface with other parts of the platform.

Preferably, the first device includes at least one first PLC of the at least one PLC and the second device includes at least one second PLC of the at least one PLC. Each device, e.g., the first device and the second device, may include a library, i.e., its own library.

The method and system disclosed herein may enable the application to assist with the assessment and thus bring in the application specific knowledge or information.

Preferably, the system includes at least one module, preferably at least one decision-making module. The determining whether to cause the second device to take over operation from the first device based on the readiness signal may be performed by the module. In other words, the PLC and the module, in particular the decision-making module, may be different or separate components. This may provide products with a device-level redundancy in a cost-efficient manner since no extra adaptation of the software platform itself is required. While a software platform that shall serve many current and future applications can be aware of the failover time, it is usually more difficult to accurately assess in a generic fashion whether the states on both devices are synchronized well enough that the application will tolerate a failover.

Hence, the present disclosure enables a generic software platform, in particular based on the PLC, to achieve a mechanism for a smoother and/or more efficient switchover or takeover for various applications. Thus, the method described herein may split or separate platform features and application related readiness logic which enables a relatively clear separation into competencies. For instance, an application developer generally knows best how to evaluate sufficient state synchronization for their respective application and the platform engineers generally know best about how to initiate and execute a switchover.

Preferably, the first device includes at least one first module of the at least one module and the second device includes at least one second module of the at least one module. Preferably, the at least one first module and the at least one second module communicate data, preferably selectively, with each other. Preferably, PLCs may communicate and/or exchange data, e.g., the PLC of the second device may select and receive one or more state-relevant signals from the PLC application on the "hot" first device.

Preferably, the method further includes:
receiving, by the at least one module, health information relating to one or more local components and/or one or more local services and/or one or more remote components of the system and/or one or more remote services from the embedded programmable logic controller, PLC, preferably from the library. The library may read and/or detect and/or include a state of one or more services of the second device and preferably determines the readiness of the second device to take over operation from the first device based on the received health information. The health information may be or may include one or more heartbeats. The health may indicate a degree of availability and/or a degree of functionality of one or more services of the respective device. A "local component" or "local service" may be or refer to a component or service of or within the concerned device. A "remote component" or "remote service" may be or refer to a component or service of or within the other device(s).

Preferably, the at least one module determines whether to cause and/or allow the second device to take over operation from the first device based on the received health information, e.g., upon one or more detected faults of the "hot" first device.

Preferably, the method further includes:
allowing and/or triggering, by the module, the second device to take over operation from the first device, when the readiness of the second device meets at least one criterion and/or the readiness of the second device meets and/or is above a readiness threshold, preferably a predetermined readiness threshold;
   and/or
preventing, preferably by the module, the second device from taking over operation from the first device, when the readiness of the second device does not meet at least one criterion and/or the readiness of the second device does not meet and/or is below a readiness threshold, preferably a predetermined readiness threshold.

Preferably, the method further includes:
receiving, by the first device and/or the second device, preferably by an embedded programmable logic controller, PLC, of the first device and/or the second device, one or more signals from the other of the first device and the second device, respectively, preferably from an embedded programmable logic controller, PLC, of the other of the first device and the second device, over a network connection, preferably an Ethernet connection, between the first device and the second device. The PLC may include at least one PID controller.

Preferably, the first device and the second device are power plant controllers and/or controllers for controlling at least one battery energy storage system. The first device and the second device may be intelligent electronic devices, lEDs.

An exemplary application of the method and system described herein, e.g., for a thermostat, e.g., a controller for controlling a heating device, or a controller in general, is described below. A PLC application may run in the soft PLC platform and may make use of an FT-Library.

PLC code may be implemented as structured text, function block diagram or other formats common to PLCs. A PID controller logic that controls a physical process may be implemented. For instance, the PID controller may be configured to keep the temperature in a room in a given range. Thereby, it needs as input signals the temperature input, and produces as output a binary signal for controlling or regulating a heating device (e.g., on or off).

The control system may be deployed redundantly in two separate devices where the input temperature is fed into the currently "hot" device, i.e., the first device, and connected via communication link to the standby device, i.e., the second device. Both devices may host the same PLC application.

The software platform may make the input temperature signal available to both, the PLC application on the first device and the PLC application on the second device.

Moreover, the software platform may receive the binary output signal from the hot PLC application on the first device and sends it (potentially via a protocol service such as MODBUS) to the heating device.

Additionally, the software platform may it makes the binary output signal of PLC app on the first device available to the PLC application on the second device (and vice-versa).

The PLC application may calculate the heating setpoints based on the temperature input (BinaryOut). The software platform may determine whether it is Standby or Hot based on the ServiceMode signal provided by the library, e.g., FT-Library. If it is standby, it runs a calculation that indicates its readiness for takeover. This calculation may take as inputs the binary setpoint outputs of its own setpoint calculation (BinaryOut2) and the binary setpoints outputs calculated by the PLC application on the other device (BinaryOut1). A simple logic to determine the readiness may be considered ready if BinaryOut1 == BinaryOut2. Finally, the PLC application provides the result of the readiness calculation (true or false) to the respective function of the FT-Library.

The PLC module on the standby device, i.e., the second device, may receive the readiness signal from the FT Library and provides it to the module. The module in turn exchanges the data with module and thus indicates if the PLC on standby is ready for takeover or not. Unless there is a fatal crash of the "hot" device, i.e., the first device, the module on the "hot" device, i.e., the first device, may now refrain from admitting a switchover to standby if the readiness signal is false.

The result may be that a switchover only happens if the binary setpoints are the same on standby as on hot. Thus, there is no abrupt change of the value caused by the switchover.

The PLC may transform the readiness signal into a more complex health score value before providing it to module. Furthermore, the PLC application outputs may be more complex than binary. The application may also provide a categorical or continuous signal to the Ft-Library to indicate the level of readiness.

According to a second aspect, the present disclosure also relates to an apparatus for assessing a readiness of a second device to take over operation of a first device. The second device may be configured to act as a backup device to the first device. The first device and the second device may each have a service-oriented architecture, SOA. The apparatus may be configured to receive data from an embedded programmable logic controller, PLC, of the second device, while the first device is in operation. The apparatus may include at least one processor which may be configured to determine whether to cause and/or allow the second device to take over operation from the first device based on the data received by the apparatus.

The features, embodiments, and advantages, as described above with respect to the method according to the first aspect of the present disclosure, apply to the apparatus accordingly. The apparatus may correspond to the "module" mentioned herein with respect to the method according to the first aspect.

According to a third aspect, the present disclosure also relates to a system which may include a first device and a second device. The second device may be configured to act as a backup device to the first device. The first device and the second device may each have a service-oriented architecture, SOA. The system may include at least one processor which may be configured to evaluate a readiness of the second device to take over operation from the first device based on data which is gathered and/or calculated, while the system is in operation. The at least one processor may be configured to generate a readiness signal based on evaluating the readiness of the second device to take over operation from the first device. The at least one processor may be configured to determine whether to cause and/or allow the second device to take over operation from the first device based on the readiness signal.

The features, embodiments, and advantages, as described above with respect to the method according to the first aspect of the present disclosure, apply to the system accordingly.

The method(s) described herein are not limited to a particular sequence. The steps of the method(s) described herein may be performed in any sequence which is technically feasible. The embodiments described herein are not meant to limit the scope of the disclosure.

The following list of aspects provides alternative and/or further features of the present disclosure:
1. A method of or for operating a system, the system including a first device and a second device, the second device being configured to act as a backup device to the first device, optionally wherein the first device and the second device each have a service-oriented architecture, SOA, wherein the method includes:
   evaluating, preferably by the system, preferably by a processor of the system, a readiness of the second device to take over operation from the first device based on data which is gathered and/or calculated, preferably while the system is in operation;
   generating, preferably by the system, preferably by a processor of the system, at least one readiness signal, preferably based on evaluating the readiness of the second device to take over operation from the first device;
   determining, preferably by the system, preferably by a processor of the system, whether to cause and/or allow the second device to take over operation from the first device, preferably based on the readiness signal.
2. The method of aspect 1, wherein evaluating, preferably by the system, preferably by a processor of the system, a readiness of the second device to take over operation from the first device includes:
   determining, preferably by the system, preferably by a processor of the system, a degree of synchronization between the first device and the second device, preferably between one or more services of the first device and one or more services of the second device.
3. The method of aspect 2, wherein the degree of synchronization between the first device and the second device is determined by comparing one or more outputs of the first device with one or more outputs of the second device and determining a degree of deviation of the one or more outputs of the first device from the one or more outputs of the second device.
4. The method of any of the preceding aspects, wherein the system includes at least one library, preferably at least one fault tolerance library, wherein the library reads and/or detects and/or includes a state of one or more services and/or one or more sub-devices, preferably one or more controllers, of the second device, and determines the readiness of the second device to take over operation from the first device based on the state.
5. The method of aspect 4, wherein the system includes at least one embedded programmable logic controller, PLC, wherein the library is comprised by the PLC or a PLC application.
6. The method of aspect 5, wherein the first device includes at least one first PLC of the at least one PLC and the second device includes at least one second PLC of the at least one PLC.
7. The method of aspect 5 or 6, wherein the system includes at least one module, preferably at least one decision-making module, wherein the determining whether to cause the second device to take over operation from the first device based on the readiness signal is performed by the module.
8. The method of aspect 7, wherein the first device includes at least one first module of the at least one module and the second device includes at least one second module of the at least one module, preferably wherein the at least one first module and the at least one second module communicate data, preferably selectively, with each other.
9. The method of aspect 7 or 8, further including:
   receiving, by the at least one module, health information relating to one or more local components and/or one or more local services and/or one or more remote components of the system and/or one or more remote services from the embedded programmable logic controller, PLC, preferably from the library, wherein the library reads and/or detects and/or includes a state of one or more services of the second device and preferably determines the readiness of the second device to take over operation from the first device based on the received health information.
10. The method of aspect 9, wherein the at least one module determines whetherto cause and/or allow the second device to take over operation from the first device based on the received health information.
11. The method of any of aspects 7 to 10, further including:
   allowing and/or triggering, by the module, the second device to take over operation from the first device, when the readiness of the second device meets at least one criterion and/or the readiness of the second device meets and/or is above a readiness threshold, preferably a predetermined readiness threshold;
      and/or
   preventing, preferably by the module, the second device from taking over operation from the first device, when the readiness of the second device does not meet at least one criterion and/or the readiness of the second device does not meet and/or is below a readiness threshold, preferably a predetermined readiness threshold.
12. The method of any of the preceding aspects, further including:
   receiving, by the first device and/or the second device, preferably by an embedded programmable logic controller, PLC, of the first device and/or the second device, one or more signals from the other of the first device and the second device, respectively, preferably from an embedded programmable logic controller, PLC, of the other of the first device and the second device, over a network connection, preferably an Ethernet connection, between the first device and the second device.
13. The method of any of the preceding aspects, wherein the first device and the second device are power plant controllers and/or controllers for controlling at least one battery energy storage system.
14. An apparatus for assessing a readiness of a second device to take over operation of a first device, the second device being configured to act as a backup device to the first device, optionally wherein the first device and the second device each have a service-oriented architecture, SOA;
   wherein the apparatus is configured to receive data from an embedded programmable logic controller, PLC, of the second device, preferably while the first device is in operation;
   wherein the apparatus includes at least one processor configured to:
      determine whether to cause and/or allow the second device to take over operation from the first device, preferably based on the data received by the apparatus.
15. A system which includes a first device and a second device, the second device being configured to act as a backup device to the first device, optionally wherein the first device and the second device each have a service-oriented architecture, SOA, wherein the system includes at least one processor configured to:
   evaluate a readiness of the second device to take over operation from the first device based on data which is gathered and/or calculated, preferably while the system is in operation;
   generate at least one readiness signal, preferably based on evaluating the readiness of the second device to take over operation from the first device;
   determine whether to cause and/or allow the second device to take over operation from the first device, preferably based on the readiness signal.

Embodiments of the present disclosure are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present disclosure. The drawings are not intended to limit the scope of the disclosure, which is defined by the appended claims and is to include the equivalents thereof.
- Fig. 1: schematically illustrates a system according to an embodiment of the present disclosure;
- Fig 2: shows a further illustration of the system of Fig. 1.

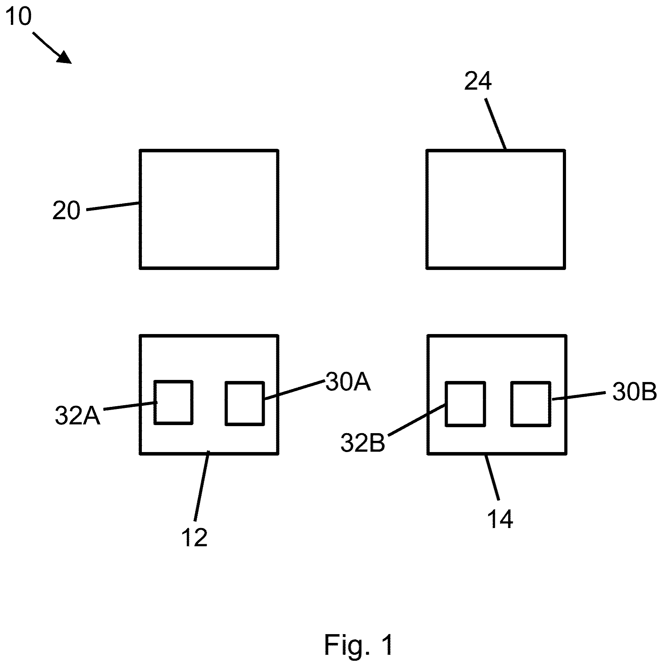

Fig. 1 shows, in a schematic view, a system 10 which may include a first device 12 and at least one second device 14. As an example, the second device 14 may be configured to act as a backup device to the first device 12. However, alternatively, or additionally, the first device 12 may be configured to act as a backup device to the second device 12, e.g., after the second device 14 has taken over operation from the first device 12, e.g., due to a fault of the first device 12 and/or while the first device 12 is being serviced and/or updated. The first device 12 and the second device 14 may each have a service-oriented architecture, SOA.

The system may include at least one processor 20 which may be configured to evaluate a readiness of the second device 14 to take over operation from the first device 12 based on data which is gathered and/or calculated, while the system 10 is in operation, i.e., while the first device 12 is operated as a "hot" device and the second device 14 is a standby or backup device to the first device 12. The at least one processor 20 may be configured to generate a readiness signal based on evaluating the readiness of the second device 14 to take over operation from the first device 12. The at least one processor 20 may be configured to determine whether to cause and/or allow the second device 14 to take over operation from the first device 12 based on the readiness signal.

The first device 12 and the second 14 may be communicatively connected or communicatively connectable to the processor 20.

The system 10, in particular the processor 20, may be configured to determine a degree of synchronization between the first device 12 and the second device 14, preferably between one or more services of the first device 12 and one or more services of the second device 14.

The degree of synchronization between the first device 12 and the second device 14 may be determined by comparing one or more outputs of the first device 12 with one or more outputs of the second device 14 and determining a degree of deviation of the one or more outputs of the first device 12 from the one or more outputs of the second device 14.

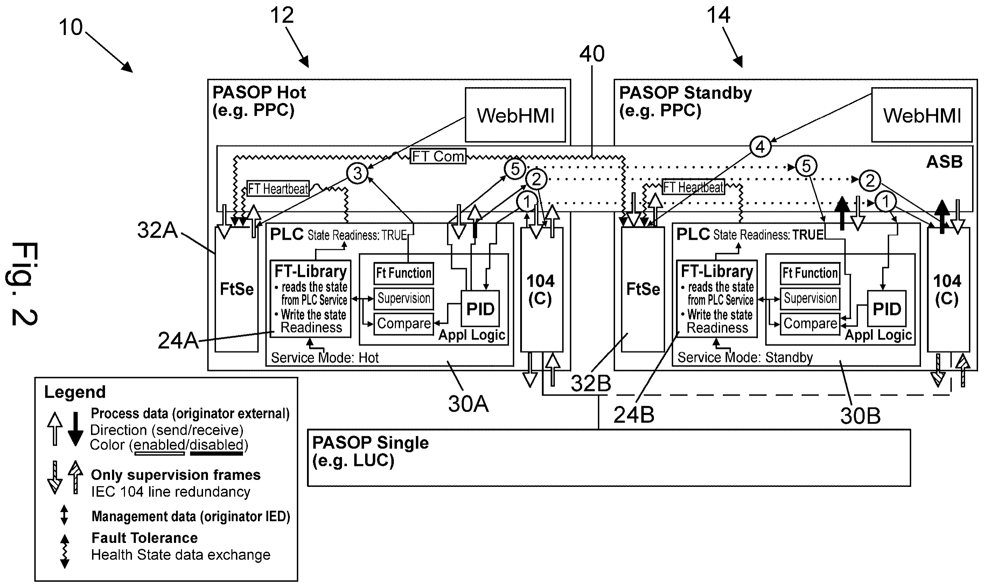

The system 10 may include at least one library 24, preferably at least one fault tolerance library 24. The library 24 may read and/or detect and/or include a state of one or more services and/or one or more sub-devices, preferably one or more controllers, of the second device 14, and may determine the readiness of the second device 14 to take over operation from the first device 12 based on the state. Each device 12, 14 may have its own library 24A, 24B (see, e.g., Fig. 2)

The system 10 may include at least one embedded programmable logic controller, PLC, 30. The library 24 may be comprised by the PLC or a PLC application.

The first device 12 may include at least one first PLC 30A of the at least one PLC 30 and the second device 14 may include at least one second PLC 30B of the at least one PLC 30.

The system 10 may include at least one module 32, preferably at least one decision-making module 32. The determining whether to cause the second device 14 to take over operation from the first device 12 based on the readiness signal may be performed by the module 32. The at least one module 32, preferably each of the at least one module 32, may include a processor, e.g., the processor 20 mentioned herein, e.g., above. The depiction in Fig. 1, i.e., such that the module 32 and the processor 20 are depicted as separate components, is only exemplary and schematic.

The at least one module 32 may be referred to in the present disclosure as an "apparatus", in particular an "apparatus for assessing a readiness of a second device to take over operation of a first device".

The first device 12 may include at least one first module 32A of the at least one module 32 and the second device 14 includes at least one second module 32B of the at least one module 32. The at least one first module 32A and the at least one second module 32B may communicate data, preferably selectively, with each other.

The system 10 may be configured to receive, preferably by the at least one module 32, health information relating to one or more local components and/or one or more local services and/or one or more remote components of the system 10 and/or one or more remote services from the embedded programmable logic controller, PLC, preferably from the library 24. The library 24 may read and/or detect and/or include a state of one or more services of the second device 14 and preferably determines the readiness of the second device 14 to take over operation from the first device 12 based on the received health information.

The at least one module 32 may be configured to determine whether to cause and/or allow the second device 14 to take over operation from the first device 12 based on the received health information.

The system 10 may be configured to allow and/or trigger, preferably by the module 32, the second device 14 to take over operation from the first device 12, when the readiness of the second device 14 meets at least one criterion and/or the readiness of the second device 14 meets and/or is above a readiness threshold, preferably a predetermined readiness threshold. Alternatively, or additionally, the system 10 may be configured to prevent, preferably by the module 32, the second device 14 from taking over operation from the first device 12, when the readiness of the second device 14 does not meet at least one criterion and/or the readiness of the second device 14 does not meet and/or is below a readiness threshold, preferably a predetermined readiness threshold.

The system 10 may be configured to receive, by the first device 12 and/or the second device 14, preferably by an or the embedded programmable logic controller, PLC, 30 of the first device 12 and/or the second device 14, one or more signals from the other of the first device 12 and the second device 14, respectively, preferably from an embedded programmable logic controller, PLC, 30 of the other of the first device 12 and the second device 14, over a network connection 40 (see, e.g., Fig. 2), preferably an Ethernet connection, between the first device 12 and the second device 14.

Fig. 2 shows a further illustration of the system 10 of Fig. 1.

The encircled numerals in Fig. 2 represent exemplary data points.

For instance, the numeral "1" stands for a data point that may come in via the 104 protocol on the "hot" device 12 and may be forwarded to the PID in the PLC. Since the data point belongs to a shared topic, it may also be sent to the PID in the PLC service on the standby device 14.

The numeral "2" represents a data point output of the PID PLC app and/or on a shared topic. Therefore, the data point output may be sent to 104 on the hot device 12 and the standby device 14.

The numeral "5" represents, in particular like the numeral "2", an output of LPC PID application on a shared topic. The output (and potentially other data points) may be used by the PID application of the standby device 14.

The arrow at 104 on the standby device 14 indicates that communication from 104 to the shared topics is prevented on the standby device 14 (data point 1 is not emitted from standby).

## Claims

1. A method of operating a system (10), the system (10) including a first device (12) and a second device (14), the second device (14) being configured to act as a backup device to the first device (12), the first device (12) and the second device (14) each having a service-oriented architecture, SOA, wherein the method includes:
evaluating, by the system (10), a readiness of the second device (14) to take over operation from the first device (12) based on data which is gathered and/or calculated, while the system (10) is in operation;
generating, by the system (10), a readiness signal based on evaluating the readiness of the second device (14) to take over operation from the first device (12);
determining, by the system (10), whether to cause and/or allow the second device (14) to take over operation from the first device (12) based on the readiness signal.

2. The method of claim 1, wherein evaluating, by the system (10), a readiness of the second device (14) to take over operation from the first device (12) includes:
determining, by the system, a degree of synchronization between the first device (12) and the second device (14), particularly between one or more services of the first device (12) and one or more services of the second device (14).

3. The method of claim 2, wherein the degree of synchronization between the first device (12) and the second device (14) is determined by comparing one or more outputs of the first device (12) with one or more outputs of the second device (14) and determining a degree of deviation of the one or more outputs of the first device (12) from the one or more outputs of the second device (14).

4. The method of any of the preceding claims, wherein the system (10) includes at least one library (24), particularly at least one fault tolerance library (24), wherein the library (24) reads and/or detects and/or includes a state of one or more services and/or one or more sub-devices, particularly one or more controllers, of the second device (14), and determines the readiness of the second device (14) to take over operation from the first device (12) based on the state.

5. The method of claim 4, wherein the system includes at least one embedded programmable logic controller (30), PLC, wherein the library is comprised by the PLC or a PLC application.

6. The method of claim 5, wherein the first device (12) includes at least one first PLC (30A) of the at least one PLC (30) and the second device (14) includes at least one second PLC (30B) of the at least one PLC (30).

7. The method of claim 5 or 6, wherein the system includes at least one module (32), particularly at least one decision-making module (32), wherein the determining whether to cause the second device (14) to take over operation from the first device (12) based on the readiness signal is performed by the module (32).

8. The method of claim 7, wherein the first device (12) includes at least one first module (32A) of the at least one module (32) and the second device (14) includes at least one second module (32B) of the at least one module (32), particularly wherein the at least one first module (32A) and the at least one second module (32B) communicate data, particularly selectively, with each other.

9. The method of claim 7 or 8, further including:
receiving, by the at least one module (32), health information relating to one or more local components and/or one or more local services and/or one or more remote components of the system and/or one or more remote services from the embedded programmable logic controller (30), PLC, particularly from the library (24), wherein the library (24) reads and/or detects and/or includes a state of one or more services of the second device (14) and particularly determines the readiness of the second device (14) to take over operation from the first device (12) based on the received health information.

10. The method of claim 9, wherein the at least one module (32) determines whether to cause and/or allow the second device (14) to take over operation from the first device (12) based on the received health information.

11. The method of any of claims 7 to 10, further including:
allowing and/or triggering, by the module (32), the second device (14) to take over operation from the first device (12), when the readiness of the second device (14) meets at least one criterion and/or the readiness of the second device (14) meets and/or is above a readiness threshold, particularly a predetermined readiness threshold;
and/or
preventing, particularly by the module (32), the second device (14) from taking over operation from the first device (12), when the readiness of the second device (14) does not meet at least one criterion and/or the readiness of the second device (14) does not meet and/or is below a readiness threshold, particularly a predetermined readiness threshold.

12. The method of any of the preceding claims, further including:
receiving, by the first device (12) and/or the second device (14), particularly by an embedded programmable logic controller (30A, 30B), PLC, of the first device (12) and/or the second device (14), one or more signals from the other of the first device (12) and the second device, respectively, particularly from an embedded programmable logic controller (30A, 30B), PLC, of the other of the first device (12) and the second device (14), over a network connection, particularly an Ethernet connection, between the first device (12) and the second device (14).

13. The method of any of the preceding claims, wherein the first device (12) and the second device (14) are power plant controllers and/or controllers for controlling at least one battery energy storage system.

14. An apparatus (30) for assessing a readiness of a second device (14) to take over operation of a first device (12), the second device (14) being configured to act as a backup device to the first device (12), the first device (12) and the second device (14) each having a service-oriented architecture, SOA;
wherein the apparatus is configured to receive data from an embedded programmable logic controller, PLC, of the second device (14), while the first device (12) is in operation;
wherein the apparatus (30) includes at least one processor (20) configured to:
determine whether to cause and/or allow the second device (14) to take over operation from the first device (12) based on the data received by the apparatus.

15. A system (10) which includes a first device (12) and a second device (14), the second device (14) being configured to act as a backup device to the first device (12), the first device (12) and the second device (14) each having a service-oriented architecture, SOA, wherein the system includes at least one processor (20) configured to:
evaluate a readiness of the second device (14) to take over operation from the first device (12) based on data which is gathered and/or calculated, while the system is in operation;
generate a readiness signal based on evaluating the readiness of the second device (14) to take over operation from the first device (12);
determine whether to cause and/or allow the second device (14) to take over operation from the first device (12) based on the readiness signal.
